# FASCICULE DE BREVET EUROPEEN

(11) **EP 2 497 172 B1**
(45) Date de publication et mention de la délivrance du brevet: **03.05.2017**
(21) Numéro de dépôt: 10795422.4
(22) Date de dépôt: 05.11.2010
(51) Int. Cl.: H02G 3/04, H01R 13/56

(54) **ELEMENT DE CONNEXION ELECTRIQUE DE TURBOMACHINE**
ELEKTROVERBINDER IN EINER TURBOMASCHINE
TURBO MACHINE ELECTRICAL CONNECTION ELEMENT

(30) Priorité: 06.11.2009 FR 0905345
(43) Date de publication de la demande: 12.09.2012
(73) Titulaire: Snecma, 75015 Paris (FR)
(72) Inventeur: AUDIC, Yvon, 50160 Bieville (FR); DETERRE, Geoffray, 77550 Moissy Cramayel Cedex (FR); LABRANCHE, Julien, 78300 Poissy (FR); PRINZIVALLE, Nicolas, 28380 Saint Remy Sur Avre (FR)
(74) Mandataire: Ramey, Daniel
(86) Numéro de dépôt international: PCT/FR2010/052385
(87) Numéro de publication internationale: WO 2011/055094

(56) Documents cités:
- EP-A1- 1 313 190
- EP-A1- 1 858 116
- WO-A1-92/22115
- WO-A1-2008/031655
- FR-A1- 2 891 954
- GB-A- 2 142 788
- US-B1- 6 374 022

## Description

La présente invention concerne un élément de connexion électrique de turbomachine, telle qu'un turboréacteur ou un turbopropulseur d'avion, ainsi qu'un moteur d'avion comportant un tel élément.

Un élément de connexion électrique, tel qu'un harnais électrique, comprend un ensemble de conducteurs électriques qui assurent une liaison entre différents équipements électriques tels par exemple qu'un système de régulation électronique moteur et des capteurs.

Les extrémités des conducteurs sont reliées à un connecteur par un dispositif de raccordement comportant un raccord tubulaire qui entoure les extrémités des conducteurs.

Le dispositif de raccordement permet de loger une surlongueur des conducteurs, cette surlongueur autorisant le démontage du connecteur en vue de sa réparation ou de son changement, lors d'une opération de maintenance.

En fonctionnement, l'élément de connexion est soumis à des vibrations qui provoquent l'usure des conducteurs par frottement sur la surface interne du raccord tubulaire du dispositif, ce qui peut se traduire par des défaillances électriques. La présence d'un revêtement anti-usure sur la surface interne du raccord tubulaire permet de limiter cette usure mais n'est pas toujours efficace.

On a déjà proposé de maintenir les conducteurs dans un dispositif de raccordement au moyen de pièces moulées en polymère qui entourent les conducteurs. Cependant, cette solution n'est pas toujours efficace et les pièces moulées autour des conducteurs ne sont pas démontables. De plus, ces pièces ne résistent pas aux hautes températures auxquelles est soumis l'élément de connexion électrique en fonctionnement, et qui sont de l'ordre de 200°C.

La technique antérieure comprend les documents suivants : FR-A1-2 891 954, EP-A1-1 313 190, WO-A1-2008/031655, WO-A1-92/22115 et EP-A1-1 858 116.

US6374022 décrit un élément selon le préambule de la revendication 1. La présente invention a pour but de remédier de façon simple, efficace et économique aux inconvénients de la technique antérieure.

Elle a pour objet un élément de connexion électrique comportant un insert de protection des conducteurs contre l'usure par frottement sur la surface interne du raccord tubulaire de l'élément de connexion, cet insert ayant une longue durée du vie et une bonne tenue aux températures élevées et aux vibrations.

L'invention propose à cet effet un élément de connexion électrique (10) pour une turbomachine, l'élément de connexion électrique comprenant un connecteur (18); un raccord tubulaire (20) ; des conducteurs (12) raccordés au connecteur (18) par le raccord tubulaire (20) qui entoure une extrémité des conducteurs ; un insert (26) de protection contre l'usure des conducteurs (12), qui est monté dans le raccord tubulaire (20) autour des conducteurs, cet insert comprenant une partie tubulaire d'extrémité (32) et un corps central (27) sensiblement tubulaire contenant les conducteurs et qui est pourvu sur au moins une partie de sa longueur d'une série d'entretoises (38) s'étendant sensiblement radialement vers l'extérieur et prenant appui sur la surface interne (28) du raccord tubulaire de l'élément de connexion, de façon à maintenir le corps central à distance de cette surface interne, les entretoises comprenant des disques (38) parallèles et espacés les uns des autres le long du corps central (27),caractérisé en ce que les disques (38) entre eux et les disques (38) et la partie tubulaire d'extrémité (32) sont reliés par des ponts de matière (40) longitudinaux et élastiquement déformables formant le corps central (27), l'insert (26) étant réalisé d'une seule pièce dans un matériau plastique et étant monté de façon coulissante dans le raccord tubulaire (20).

Cet insert est avantageusement élastiquement déformable, en particulier en flexion, de façon à faciliter son montage et son démontage dans le raccord tubulaire de l'élément de connexion, qui peut être droit ou coudé, par exemple à 30, 45, 60 ou 90°. Quelle que soit la forme de ce raccord tubulaire, une seule référence d'insert flexible peut être utilisée, ce qui est très économique. De plus, cet insert peut être intégré dans des dispositifs de raccordement actuels. L'insert est par exemple réalisé d'une seule pièce dans un matériau plastique, tel que du polytétrafluoroéthylène (PTFE), résistant aux températures auxquelles les élément de connexion est soumis en fonctionnement.

Ces disques, qui s'étendent autour des conducteurs, peuvent être reliés entre eux par des ponts de matière longitudinaux et élastiquement déformables, qui forment le corps central contenant les conducteurs.

L'insert peut en outre comprendre une extrémité tubulaire qui est reliée à une extrémité du corps central et dont le diamètre externe est sensiblement égal à celui du diamètre interne du raccord tubulaire de l'élément de connexion, cette extrémité tubulaire délimitant une chambre de stockage d'une surlongueur des conducteurs de l'élément de connexion. Cette surlongueur est destinée à autoriser le démontage du connecteur de l'élément de connexion électrique, en vue de sa réparation ou de son changement.

L'extrémité du corps central, opposée à l'extrémité cylindrique, peut avoir une forme sensiblement tronconique.

Avantageusement, l'insert comporte sur toute sa longueur une fente longitudinale traversante pour son montage sur les conducteurs de l'élément de connexion.

L'insert est de préférence monté de manière amovible dans le raccord tubulaire.

La présente invention concerne en outre un moteur d'avion, caractérisé en ce qu'il comprend au moins un élément de connexion électrique décrit ci-dessus.

L'invention sera mieux comprise et d'autres détails, caractéristiques et avantages de celle-ci apparaîtront plus clairement à la lecture de la description qui suit, faite à titre d'exemple non limitatif et en référence aux dessins annexés, dans lesquels :
- la figure 1 est une vue schématique de côté d'un dispositif de raccordement à un connecteur des conducteurs d'un élément de connexion électrique de moteur d'avion ;
- les figures 2 et 3 sont des vues schématiques en perspective et en coupe axiale, respectivement, du dispositif de la figure 1 ;
- les figures 4 et 5 sont des vues schématiques de côté de l'insert selon l'invention ; et
- la figure 6 est une vue schématique en perspective d'une variante de réalisation de l'insert selon l'invention.

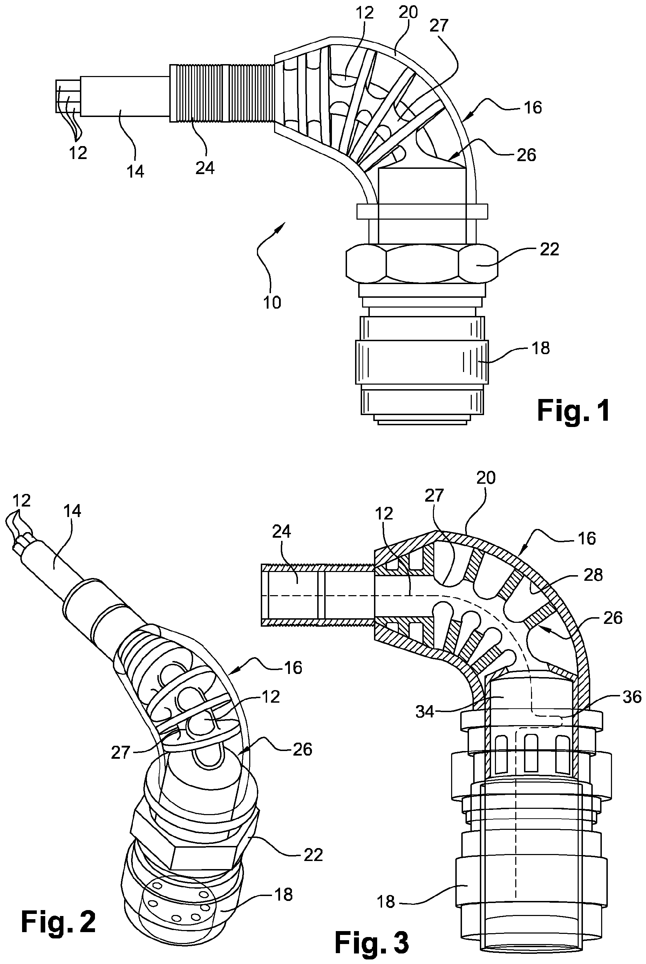

On se réfère d'abord à la figure 1 qui représente une partie d'extrémité d'un élément de connexion électrique 10, cet élément de connexion 10 comportant un ou plusieurs conducteurs 12 servant à la transmission de signaux électriques, qui sont entourés par une structure tubulaire 14 de protection et dont les extrémités sont reliées par un dispositif de raccordement 16 à un connecteur 18.

Le dispositif de raccordement 16 comprend un raccord tubulaire 20 qui entoure les extrémités des conducteurs 12, qui sont raccordées électriquement au connecteur 18.

Le raccord tubulaire 20 a ici une forme coudée à 90° et porte à une extrémité un écrou 22 qui est libre en rotation et est vissé sur une partie correspondante du connecteur 18, pour solidariser le raccord 20 au connecteur 18.

Le raccord 20 comporte à son extrémité opposée à l'écrou 22 des moyens 24 de fixation sur une extrémité de la structure tubulaire 14. Le raccord 20 est rigide et en métal.

Selon l'invention, un insert 26 de protection des conducteurs 12 contre l'usure est logé dans le raccord tubulaire 20 du dispositif de raccordement 16, cet insert 26 entourant les conducteurs 12 et les maintenant à distance de la surface interne 28 du raccord tubulaire pour les empêcher de s'user par frottement sur cette surface interne.

L'insert 26, mieux visible aux figures 2 à 5, a une forme sensiblement tubulaire et comporte un corps central 27 à l'intérieur duquel s'étendent les conducteurs 12.

Une partie 30 de l'insert 26 est annelée et reliée à une partie tubulaire d'extrémité 32, la partie annelée s'étendant par exemple sur deux tiers environ de la longueur de l'insert et la partie tubulaire s'étendant sur un tiers environ de la longueur de l'insert.

La partie tubulaire d'extrémité 32 a un diamètre externe D sensiblement égal au diamètre de la surface interne 28 du raccord tubulaire 20 (figure 3). Cette partie tubulaire 32 délimite une chambre cylindrique 34 de stockage d'une surlongueur 36 des conducteurs, cette surlongueur 36 autorisant le démontage du connecteur 18 en vue de sa réparation ou de son changement, lors d'une opération de maintenance. La partie tubulaire 32 est destinée à être montée dans la partie d'extrémité du raccord tubulaire 20, située du côté du connecteur 18.

La partie annelée 30 de l'insert 26 comprend des disques 38 s'étendant radialement vers l'extérieur, par rapport à l'axe longitudinal A de l'insert, et ayant un diamètre externe D, c'est-à-dire égal au diamètre externe de la partie tubulaire 32 et au diamètre de la surface interne 28 du raccord tubulaire 20. Les disques 38 forment des entretoises et sont destinés à venir en appui par leur périphérie sur la surface interne 28 du raccord tubulaire 20.

Les disques 38 sont parallèles et à distance axiale les uns des autres. Ils sont reliés entre eux et à la partie tubulaire 32 par des ponts de matière 40 longitudinaux définissant le corps central 27. Chaque disque 38 est relié à un disque adjacent par deux ponts parallèles de matière diamétralement opposés l'un par rapport à l'autre.

Les ponts de matière 40 sont élastiquement déformables et autorisent des déformations élastiques de l'insert 26, en particulier en flexion.

L'extrémité de la partie annelée 30, située du côté opposé à la partie tubulaire 32, a une forme tronconique, qui est destinée à être montée dans la partie d'extrémité de forme complémentaire du raccord tubulaire 20, située du côté opposé au connecteur 18.

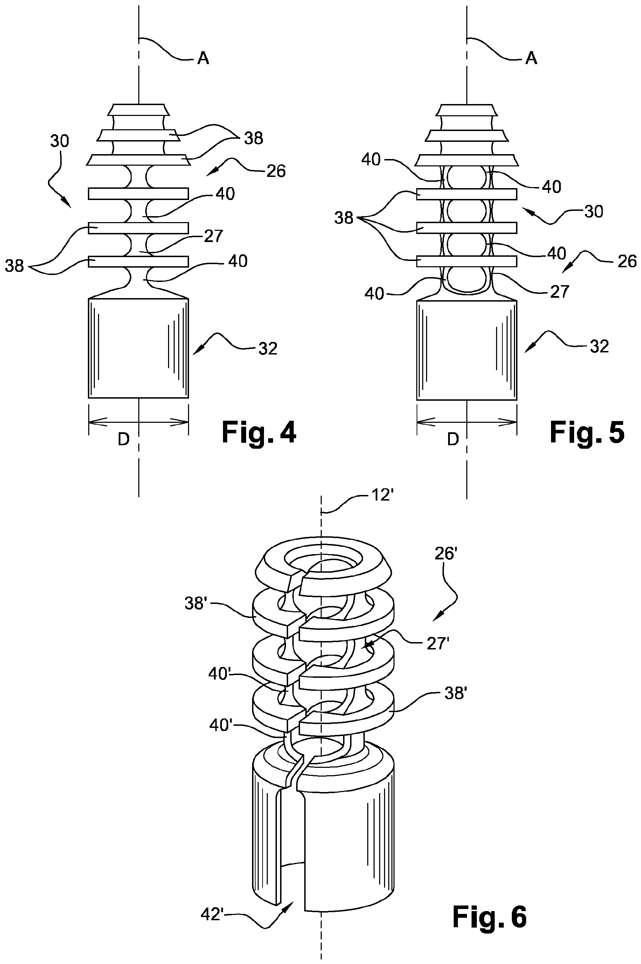

En position sans contrainte, représentée aux figures 4 et 5, l'insert 26 a une forme droite. Cet insert 26 peut être monté dans un raccord tubulaire droit d'un dispositif de raccordement. Il n'est alors pas nécessaire de déformer l'insert pour l'engager dans le raccord tubulaire. L'insert 26 peut également être monté dans un raccord tubulaire coudé, par exemple à 30, 45, 60 ou 90°. Il doit alors être déformé élastiquement en flexion lors de son montage dans le raccord tubulaire.

Dans l'exemple représenté aux figures 1 à 3, l'insert 26 est monté dans un raccord tubulaire 20 coudé à 90° et adopte cette forme coudée lors de son montage dans le corps.

Dans la variante de réalisation de la figure 6, l'insert 26' comprend une fente longitudinale 42' traversante, s'étendant sur toute la longueur de l'insert. La fente 42' est à 90° environ des ponts de matière 40' reliant les disques 38'. Les conducteurs 12' sont engagés dans le corps central 27' de l'insert 26' à travers cette fente 42'.

L'insert 26, 26' selon l'invention est monté dans le raccord tubulaire 20 de l'élément de connexion 10 de la façon suivante. Les conducteurs 12, 12' sont engagés dans le corps central 27, 27' de l'insert par translation axiale dans le cas de l'insert 26, ou par translation radiale à travers la fente 42' dans le cas de l'insert 26'. L'insert est ensuite engagé dans le raccord tubulaire 20 et épouse la forme interne de celui-ci. Les extrémités des conducteurs 12 sont raccordées au connecteur puis l'écrou 22 porté par le raccord tubulaire 20 est vissé sur le connecteur 18. Une surlongueur 36 des conducteurs 12 est alors logée dans la chambre 34 définie par la partie tubulaire 32 de l'insert (figure 3).

Dans une autre variante des moyens décrits et représentés, les disques 38 et 38' de l'insert sont reliés entre eux par un nombre de ponts de matière 40, 40' différent de 2, par exemple égal à 1, 3 ou 4. La liaison des disques entre eux peut aussi être assurée par une paroi cylindrique dont l'épaisseur autorise la flexion de l'insert tout en lui conservant une longueur ou dimension axiale voulue.

## Revendications

1. Elément de connexion électrique (10) pour une turbomachine, l'élément de connexion électrique comprenant un connecteur (18) ; un raccord tubulaire (20) ; des conducteurs (12) raccordés au connecteur (18) par le raccord tubulaire (20) qui entoure une extrémité des conducteurs ; un insert (26) de protection contre l'usure des conducteurs (12), qui est monté dans le raccord tubulaire (20) autour des conducteurs, cet insert comprenant une partie tubulaire d'extrémité (32) et un corps central (27) sensiblement tubulaire contenant les conducteurs et qui est pourvu sur au moins une partie de sa longueur d'une série d'entretoises (38) s'étendant sensiblement radialement vers l'extérieur et prenant appui sur la surface interne (28) du raccord tubulaire de l'élément de connexion, de façon à maintenir le corps central à distance de cette surface interne, les entretoises comprenant des disques (38) parallèles et espacés les uns des autres le long du corps central (27),
**caractérisé en ce que** les disques (38) entre eux et les disques (38) et la partie tubulaire d'extrémité (32) sont reliés par des ponts de matière (40) longitudinaux et élastiquement déformables formant le corps central (27), l'insert (26) étant réalisé d'une seule pièce dans un matériau plastique et étant monté de façon coulissante dans le raccord tubulaire (20).

2. Elément de connexion selon la revendication 1, **caractérisé en ce que** l'insert est élastiquement déformable, en particulier en flexion.

3. Elément de connexion selon l'une des revendications précédentes, **caractérisé en ce que** l'extrémité tubulaire (32) de l'insert (26) présente un diamètre externe (D) sensiblement égal au diamètre interne du raccord tubulaire (20) de l'élément de connexion, ladite partie tubulaire délimitant une chambre (34) de stockage d'une surlongueur (36) des conducteurs (12) de l'élément de connexion.

4. Elément de connexion selon la revendication 3, **caractérisé en ce que** l'extrémité de l'insert opposée à l'extrémité tubulaire (32), a une forme sensiblement tronconique.

5. Elément de connexion selon l'une des revendications précédentes, **caractérisé en ce que** l'insert comprend une fente longitudinale (42') s'étendant sur toute sa longueur pour son montage sur les conducteurs (12') de l'élément de connexion.

6. Elément de connexion selon l'une des revendications précédentes, **caractérisé en ce que** l'insert est monté de manière amovible dans le raccord tubulaire qui est droit ou coudé.

7. Moteur d'avion, **caractérisé en ce qu'**il comprend au moins un élément de connexion électrique (10) selon l'une des revendications précédentes.

## Patentansprüche

1. Elektrisches Verbindungselement (10) für eine Turbomaschine, wobei das elektrische Verbindungselement einen Verbinder (18); einen rohrförmigen Anschluss (20); Leiter (12), die mit dem Verbinder (18) über den rohrförmigen Anschluss (20) verbunden sind, der ein Ende der Leiter umgibt; einen Schutzeinsatz (26) zum Schutz der Leiter (12) vor Verschleiß, der in dem rohrförmigen Anschluss (20) um die Leiter herum gelagert ist, wobei dieser Einsatz einen rohrförmigen Endabschnitt (32) und einen im Wesentlichen rohrförmigen Mittelkörper (27) enthält, der die Leiter beinhaltet und der über zumindest einen Teil seiner Länge mit einer Reihe von Verstrebungen (38) versehen ist, die sich im Wesentlichen radial nach außen erstrecken und sich an der Innenfläche (28) des rohrförmigen Anschlusses des Verbindungselements so abstützen, dass sie den Mittelkörper auf Abstand von dieser Innenfläche halten, wobei die Verstrebungen Scheiben (38) aufweisen, die parallel verlaufen und entlang des Mittelkörpers (27) voneinander beabstandet sind,
**dadurch gekennzeichnet, dass** die Scheiben (38) miteinander und die Scheiben (38) und der rohrförmige Endabschnitt (32) über longitudinale Materialbrücken (40) verbunden sind, die elastisch verformbar sind und den Mittelkörper (27) bilden, wobei der Einsatz (26) einstückig aus einem Kunststoffmaterial hergestellt und gleitbeweglich in dem rohrförmigen Anschluss (20) gelagert ist.

2. Verbindungselement nach Anspruch 1, **dadurch gekennzeichnet, dass** der Einsatz elastisch verformbar, insbesondere biegeverformbar ist.

3. Verbindungselement nach einem der vorangehenden Ansprüche, **dadurch gekennzeichnet, dass** das rohrförmige Ende (32) des Einsatzes (26) einen Außendurchmesser (D) im Wesentlichen gleich dem Innendurchmesser des rohrförmigen Anschlusses (20) des Verbindungselements aufweist, wobei der rohrförmige Abschnitt eine Speicherkammer (34) mit einer Überlänge (36) für die Leiter (12) des Verbindungselements eingrenzt.

4. Verbindungselement nach Anspruch 3, **dadurch gekennzeichnet, dass** das dem rohrförmigen Ende (32) entgegengesetzte Ende des Einsatzes eine im Wesentlichen kegelstumpfförmige Form hat.

5. Verbindungselement nach einem der vorangehenden Ansprüche, **dadurch gekennzeichnet, dass** der Einsatz für seine Montage an den Leitern (12') des Verbindungselements einen Längsschlitz (42') hat, der sich über seine gesamte Länge erstreckt.

6. Verbindungselement nach einem der vorangehenden Ansprüche, **dadurch gekennzeichnet, dass** der Einsatz abnehmbar in dem rohrförmigen Anschluss gelagert ist, der gerade oder gebogen ausgeführt ist.

7. Flugzeugtriebwerk, **dadurch gekennzeichnet, dass** es zumindest ein elektrisches Verbindungselement (10) nach einem der vorangehenden Ansprüche aufweist.

## Claims

1. An electrical connection element (10) for a turbine engine, the electrical connection element comprising: a connector (18); a tubular coupling (20); conductors (12) connected to the connector by the tubular coupling surrounding an end of the conductors; an insert for providing protection against wear of the conductors (12), the insert being disposed in the tubular coupling (20) around the conductors, the insert comprising a tubular end (32) and a substantially tubular central body (27) containing the conductors and provided over at least a fraction of its length with a series of spacers (38) extending substantially radially outwards and bearing against an inside surface (28) of the tubular coupling of the connection element so as to hold the central body at a distance from the inside surface, the spacers comprising parallel disks (38) that are spaced apart from one another along the central body (27); **characterized in that**, the disks (38) are connected together and to the tubular end (32) by longitudinal bridges (40) of material that are elastically deformable and that form the central body (27), the insert (26) is made as a single piece of plastics material and is mounted slidably inside the tubular coupling (20).

2. A connection element according to claim 1, **characterized in that** the insert is elastically deformable, and particularly is bendable.

3. A connection element according to any of the preceding claims, **characterized in that** the tubular end (32) of the insert (26) having an outside diameter (D) that is substantially equal to the inside diameter of the tubular coupling (20) of the connection element, the tubular end defining a storage chamber (34) for storing extra lengths (36) of the conductors of the connection element.

4. A connection element according to claim 3, **characterized in that** the end of the insert remote from the tubular end (32) is substantially frustoconical in shape.

5. A connection element according to any of the preceding claims, **characterized in that** the insert includes a longitudinal slot (42') extending over its entire length so as to enable the insert to be mounted on the conductors (12') of the connection element.

6. A connection element according to any of the preceding claims, wherein the insert is releasably mounted in the tubular coupling which is straight or forms a bend.

7. An airplane engine, comprising at least one electrical connection element according to any of the preceding claims.
